# EUROPÄISCHE PATENTANMELDUNG

(11) **EP 2 382 855 A2**
(43) Veröffentlichungstag der Anmeldung: **02.11.2011**
(21) Anmeldenummer: 11401067.1
(22) Anmeldetag: 26.04.2011
(51) Int. Cl.: A01D 43/063

(54) **Fahrbare Sammelmaschine**

(30) Priorität: 29.04.2010 DE 102010016689
(71) Anmelder: Amazonen-Werke H. Dreyer GmbH & Co. KG, 49205 Hasbergen (DE)
(72) Erfinder: Bahl, Benoit, 57620, Goetzenbruck (FR)

(57) **Zusammenfassung**

Fahrbare Sammelmaschine, Mäh -, Vertikutier - und/oder Kehrgerät, mit einem ein Gehäuse aufweisenden Rahmen, eine von einer Antriebsvorrichtung angetriebene Aufnahmevorrichtung (4), die das aufzusammelnde Gut aufnimmt und einem sich an das Gehäuse anschließenden Sammelbehälter (6) zuführt, wobei der Sammelbehälter eine Entleerungsöffnung (7) aufweist und zum Entleeren so verschwenkbar ist, dass die Entleerungsöffnung (7) zumindest teilweise nach unten weist, wobei die Entleerungsöffnung durch eine verschwenkbare Klappe (8) verschließbar ist. Um eine einfach ausgestaltete Überwachungseinrichtung zur Feststellung der Situation, ob der Sammelbehälter gefüllt gefüllt ist und entleert werden muss, geschaffen, ist vorgesehen, dass dem Sammelbehälter ein Signalgeber (15) für die Meldung "Sammelbehälter voll" zu geordnet ist, dass der Signalgeber (15) mit einer Anzeigevorrichtung (17) einer Überwachungseinrichtung verbunden ist, dass der Signalgeber (15) im Bereich zwischen einer Wand (11') des Sammelbehälters (6) und der die Entleerungsöffnung verschließende Klappe (8) angeordnet ist.

## Beschreibung

Die Erfindung betrifft fahrbare Sammelmaschine gemäß des Oberbegriffes des Patentanspruches 1.

Derartige fahrbare Sammelmaschinen sind in der Praxis bekannt. Diese Sammelmaschinen weisen einen Sammelbehälter auf. Vielfach ist nicht auf einfache Weise erkennbar, ob der Sammelbehälter bereits gefüllt ist und entleert werden muss.

Der Erfindung liegt die Aufgabe zu Grunde, hier auf einfache Weise Abhilfe zu schaffen.

Diese Aufgabe wird erfindungsgemäß dadurch gelöst, dass dem Sammelbehälter ein Signalgeber für die Meldung "Sammelbehälter voll" zu geordnet ist, dass der Signalgeber mit einer Anzeigevorrichtung einer Überwachungseinrichtung verbunden ist, dass der Signalgeber im Bereich zwischen einer Wand des Sammelbehälters und der die Entleerungsöffnung verschließende Klappe angeordnet ist. Infolge dieser Maßnahmen werden über den Signalgeber der Überwachungseinrichtung entsprechende Signale übermittelt, so dass der Fahrer der Sammelmaschine signalisiert bekommt, dass der Sammelbehälter gefüllt ist und entleert werden muss. Hierbei wird darauf zurückgegriffen, dass das zu sammelnde Gut in den Vorratsbehälter gefördert wird und wenn der Vorratsbehälter voll ist, dass dann die Klappe von dem sich im Sammelbehälter befindlichen Sammelgut angehoben wird. Dieses Anheben der Klappe wird von dem Signalgeber erfasst und von der Überwachungseinrichtung als "Behälter voll" bzw. "Klappe nicht geschlossen" interpretiert. Somit ist eine einfach ausgestaltete Überwachungseinrichtung zur Feststellung der Situation, ob der Sammelbehälter gefüllt gefüllt ist und entleert werden muss, geschaffen.

Weiterhin kann der Signalgeber erfassen, wenn die Klappe geschlossen ist und sich so in der den Sammelbehälter abdeckenden Stellung befindet. In dieser abdeckenden Stellung dient die Klappe als Sicherheitsabdeckung.

In einfacher Weise lässt sich die Situation "Behälter gefüllt" dadurch erfassen, dass durch Abheben der Klappe von der Wand des Sammelbehälters der Signalgeber ein Signal an die Überwachungseinrichtung übermittelt.

Eine einfache Sicherheitsschaltung lässt sich dadurch aufbauen, dass die Überwachungseinrichtung eine mit der Antriebsvorrichtung verbundene Sicherheitsvorrichtung aufweist, dass die Sicherheitsvorrichtung derart ausgestaltet ist, dass die Aufnahmevorrichtung nur dann antreibbar ist, wenn der Signalgeber meldet, ob die Klappe in der Schließstellung der Entleerungsöffnung sich befindet.

Um Störgrößen auszuschalten und Fehlanzeige zu vermeiden, ist vorgesehen, dass der Signalgeber und/oder die Überwachungseinrichtung auf elektronischer Basis arbeitet und eine Filter- und/oder Verzögerungsglied aufweist, dass derart ausgestaltet ist, dass ein vibrieren und/oder kurzzeitiges anheben der Klappe keine Signalübertragung und/oder Anzeige auslöst.

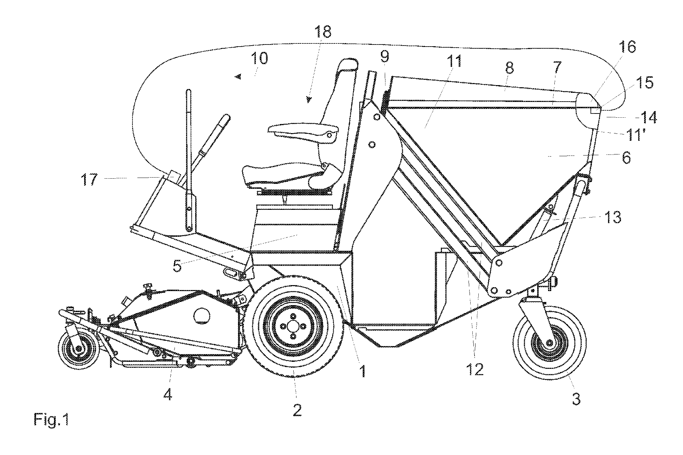

Weitere Einzelheiten der Erfindung sind der Beispielsbeschreibung und den Zeichnungen zu entnehmen. Hierbei zeigen
- Fig. 1: die Sammelmaschine mit geschlossenem Deckel des Sammelbehälters in Seitenansicht

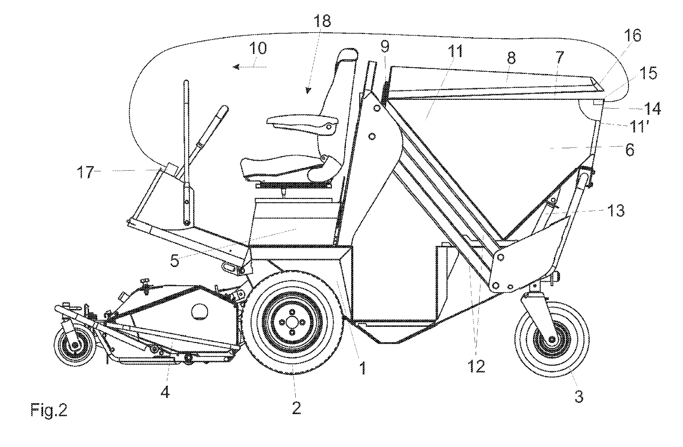

- Fig. 2: die Sammelmaschine mit der Durchsicht in den Sammelbehälter bei gefüllten Sammelbehälter leicht angehobenen Deckel des Sammelbehälters.

Die Sammelmaschine ist als selbst fahrendes Mäh-, Vertikutier-, und/oder Kehrgerät ausgebildet. Sie weist den Rahmen 1 auf, der sich über die Antriebsräder 2 und die Laufräder 3 auf dem Boden abstützt. Im vorderen Bereich ist die Aufnahmevorrichtung 4 an dem das Gehäuse 5 aufweisenden Rahmen 1 angeordnet. Die Aufnahmevorrichtung 4 nimmt das aufzusammelnde Gut auf und fördert es über eine nicht dargestellte Transportvorrichtung in die sich an dem Gehäuse 5 anschließenden Sammelbehälter 6. Der Sammelbehälter 6 weist auf seiner Oberseite eine Entleerungsöffnung 7 auf, die durch einen als Klappe ausgebildete Deckel 8 abgedeckt ist. Der Deckel 8 ist mittels Gelenken 9, die eine quer zur Fahrtrichtung 10 verlaufende Schwenkachse aufweisen, an den Wänden 11 des Sammelbehälters 6 im vorderen oberen Bereich aufschwenkbar angelenkt. Der Sammelbehälter 6 ist mittels einer Schwenk- und Hebevorrichtung 12 am Rahmen 1 der Sammelmaschine befestigt. Zum Entleeren des Sammelbehälters 6 kann dieser mittels der Schwenk- und Hebevorrichtung 12, der motorische Betätigungsmittel 13 zugeordnet sind, angehoben und nach hinten verschwenkt werden. Die Verschwenkung erfolgt in der Art, dass die Entleerungsöffnung 7 zumindest teilweise nach unten weist.

Im Bereich des oberen Endes 14 der hinteren Wand 11' im Bereich der Entleerungsöffnung 7 ist ein Signalgeber 15 für die Meldung "Sammelbehälter voll" und "Deckel geschlossen" angeordnet. Dieser Signalgeber 15 wirkt mit dem hinteren Ende 16 der verschwenkbaren Klappe 8 zusammen. Der Signalgeber 15 ist somit im Bereich zwischen einer Wand 11' des Sammelbehälters 6 und der die Entleerungsöffnung 7 verschließende Klappe 8 angeordnet.

Weiterhin ist der Signalgeber 15 mit einer Anzeigevorrichtung 17 einer Überwachungseinrichtung, die im Sichtfeld des die Sammelmaschine fahrenden Fahrers, der auf dem Fahrersitz 18 der Sammelmaschine sitzt, angeordnet.

Der Signalgeber 15 und/oder die Überwachungseinrichtung arbeiten auf elektronischer Basis. Um zu vermeiden, dass der Signalgeber 15 und/oder die Überwachungseinrichtung aufgrund von Fahrbewegungen die Klappe 8 von der Wand 11' des Sammelbehälters 6 sich kurzzeitig abhebt und hierdurch ein Signal ausgelöst und dieses weitergegeben wird, ist eine Filter- und/oder Verzögerungsglied vorgesehen, dass derart ausgestaltet ist, dass ein vibrieren und/oder kurzzeitiges abheben der Klappe 8 von der Wand 11' bzw. Entfernen vom Signalgeber 15 keine Signalübertragung und/oder Anzeige auf der Anzeigevorrichtung 17 der Überwachungseinrichtung auslöst.

Weiterhin ist die Überwachungseinrichtung mit einer mit der Antriebsvorrichtung verbundenen Sicherheitsvorrichtung verbunden. Die Sicherheitsvorrichtung ist derart ausgestaltet, dass die Aufnahmevorrichtung 4 nur dann antreibbar ist, wenn der Signalgeber 15 meldet, dass die als Deckel ausgebildete Klappe 8 sich in Schließstellung der Entleerungsöffnung 7 befindet. Hierbei ist die Antriebsvorrichtung und Sicherheitsvorrichtung derart ausgestaltet, dass die Überwachungseinrichtung auch auf die Antriebseinrichtung für die Fördervorrichtung des Gutes von der Aufnahmevorrichtung 4 zu dem Sammelbehälter 6 entsprechend einwirkt.

## Patentansprüche

1. Fahrbare Sammelmaschine, Mäh -, Vertikutier - und/oder Kehrgerät, mit einem ein Gehäuse aufweisenden Rahmen, eine von einer Antriebsvorrichtung angetriebene Aufnahmevorrichtung, die das aufzusammelnde Gut aufnimmt und einem sich an das Gehäuse anschließenden Sammelbehälter zuführt, wobei der Sammelbehälter eine Entleerungsöffnung aufweist und zum Entleeren so verschwenkbar ist, dass die Entleerungsöffnung zumindest teilweise nach unten weist, wobei die Entleerungsöffnung durch eine verschwenkbare Klappe verschließbar ist, **dadurch gekennzeichnet, dass** dem Sammelbehälter (6) ein Signalgeber (15) für die Meldung "Sammelbehälter voll" zu geordnet ist, dass der Signalgeber (15) mit einer Anzeigevorrichtung (17) einer Überwachungseinrichtung verbunden ist, dass der Signalgeber (15) im Bereich zwischen einer Wand (11') des Sammelbehälters (6) und der die Entleerungsöffnung (7) verschließende Klappe (8) angeordnet ist.

2. Sammelmaschine nach Anspruch eins, **dadurch gekennzeichnet, dass** durch Abheben der Klappe (8) von der Wand (11') des Sammelbehälters (6) der Signalgeber (15) ein Signal an die Überwachungseinrichtung übermittelt.

3. Sammelmaschine nach zumindest einem der vorstehenden Ansprüche, **dadurch gekennzeichnet, dass** die Überwachungseinrichtung eine mit der Antriebsvorrichtung verbundene Sicherheitsvorrichtung aufweist, dass die Sicherheitsvorrichtung derart ausgestaltet ist, dass die Aufnahmevorrichtung (4) nur dann antreibbar ist, wenn der Signalgeber (15) meldet, ob die Klappe (8) in der Schließstellung der Entleerungsöffnung (7) sich befindet.

4. Sammelmaschine nach zumindest einem der vorstehenden Ansprüche, **dadurch gekennzeichnet, dass** der Signalgeber (15) und/oder die Überwachungseinrichtung auf elektronischer Basis arbeitet und eine Filter- und/oder Verzögerungsglied aufweist, dass derart ausgestaltet ist, dass ein vibrieren und/oder kurzzeitiges anheben der Klappe (8) keine Signalübertragung und/oder Anzeige auslöst.
